# EUROPEAN PATENT SPECIFICATION

(11) **EP 3 286 922 B1**
(45) Date of publication and mention of the grant of the patent: **10.06.2020**
(21) Application number: 16720765.3
(22) Date of filing: 22.04.2016
(51) Int. Cl.: H04N 21/4728, G03B 17/53, H04N 5/272

(54) **ENHANCING A MEDIA RECORDING COMPRISING A CAMERA RECORDING**
MEDIENAUFZEICHNUNGSVERBESSERUNG MIT KAMERAAUFZEICHNUNG
AMÉLIORATION D'UN ENREGISTREMENT DE SUPPORTS D'ENREGISTREMENT COMPRENANT UNE CAMÉRA

(30) Priority: 24.04.2015 EP 15165075
(43) Date of publication of application: 28.02.2018
(73) Proprietor: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: STOKKING, Hans, Maarten, 2292 CH Wateringen (NL); PRINS, Martin, 2564 BL The Hague (NL); NIAMUT, Omar, Aziz, 3135 PA Vlaardingen (NL); KOENEN, Robert, 3061 BC Rotterdam (NL); THOMAS, Emmanuel, 2611 KP Delft (NL)
(74) Representative: Wuyts, Koenraad Maria
(86) International application number: PCT/EP2016/059031
(87) International publication number: WO 2016/170123

(56) References cited:
- US-A- 5 574 511
- US-A1- 2008 077 954
- US-A1- 2009 204 639
- US-A1- 2012 033 876
- US-A1- 2014 178 029

## Description

### FIELD OF THE INVENTION

The invention relates to a system and method for enhancing a media recording. The invention further relates to a sender device or receiver device for use in the system. The invention further relates to a computer program product comprising instructions for causing a processor system to perform the method.

### BACKGROUND ART

Due to the ubiquity of digital cameras and screens, it may frequently occur that a camera recording of a scene includes a screen displaying visual content as part of the camera recording. This may take place coincidentally. For example, when recording a home video in someone's living room with a digital video camera, there may be a television playing out a television show in the background. As such, the home video may include a camera recording of the television and the visual content playing on the television at the time of recording.

Media recordings may also more structurally include camera recordings of screens displaying visual content. Here and in the following, the term 'screen' refers to displays such as those included in televisions, monitors, tablet devices, smartphones, etc., including two-dimensional, three-dimensional, light field and holographic displays, but also to projection screens and other types of surfaces on which visual content may be rendered, as well as to other types of visual rendering of visual content.

A non-limiting example of the more structural recording of screens displaying visual content can be found in the field of videoconferencing systems and mobile video communication applications (e.g. Skype, Lync, WebRTC, FaceTime), which allow remotely located people to have real-time conversations by recording audio via a microphone and video via a camera and transmitting the resulting media recording to the parties involved. Initially, videoconferencing systems focused on recording only the people involved in the conversation as people typically will sit in front of the camera. Advancements in camera recording techniques, such as increased resolution and a larger angle of view, have made it possible to record much more than just the person; the camera can also record his/her environment such as the living room or office cubicle, including any screens that may be present, such as a television screen which is showing television content, or a tablet device which is showing visual media. Furthermore, videoconferencing technology is increasingly used for non-mediated shared experiences, where participants share their activities and environment using videoconferencing, for others to see and join. For example, in social television experiences, participants will share their experience of watching a television content item, enabling others to see their room and their television screen. As another example, users can also deliberately record their television screen in order to comment on what is being displayed and share the resulting recording with other users.

As such, camera recordings nowadays frequently include screens displaying visual content. A clear disadvantage, however, is that in such a camera recording, the visual content displayed on the screen is typically represented poorly in the recording; other parts of the scene typically look better, or even much better.

There may be a variety of reasons for this, including but not limited to:
- interference between the sensor raster of the camera and the screen raster, causing Moire effects (spatial interference);
- a mismatch between the refresh rate of the visual content on the screen and the sampling rate of the camera (temporal interference);
- the dynamic range of the scene and lighting conditions (while indoors, screens are often much brighter than the environment which results in over-exposure, while outdoors in broad daylight, the reverse may happen, namely under-exposure);
- motion of the camera relative to the screen;
- the quality of the camera used for the camera recording;
- recording artifacts (tearing; aliasing; interlacing);
- encoder settings in case of the media recording being encoded;
- viewing angle of the camera with respect to the screen

To improve the quality of the visual content in the camera recording, one could opt to increase the quality of the camera recording, e.g., by increasing the recording resolution, framerate and/or video quality. Disadvantageously, this may lead to a larger size camera recording. This may be undesirable or impossible due to bandwidth or storage constraints, and may not be possible when using generally available current-day recording devices such as smartphones or tablets, which do not contain such high quality camera functions. Moreover, even when feasible, an increase in recording quality does not address problems such as dynamic range problems, etc.

US 2008/0077954 A1 describes a classification method and system for content alteration of a media work including criteria regarding content that is feasible for alteration. Such criteria may be maintained in records that are accessible to an interested party. Some embodiments include a record of primary authorization rights applicable to a possible content alteration. A further embodiment feature may include a record of secondary authorization rights applicable to substitute altered content incorporated in a derivative version. Various techniques may be used to incorporate substitute altered content in a derivative version of the media work in accordance with applicable substitution guidelines.

US20140178029A1 discloses an apparatus and system for establishing an Augmented Reality (AR) Kiosk (ARK) in public places or social venues. ARK deploys a camera to capture, in real time, user's physical world environment, augments camera view by overlaying one or more layers of contextual computer-generated virtual content, and allows user/users to interact with the virtual content by positioning at a predefined spot in front of a digital display and the camera. Such interaction is recorded in real time, requiring zero post-production time, as composite media file, personalized with recipient's credentials, and instantly sent via Internet to one or more user specified destinations for future use and sharing with friends and family.

US5574511A discloses taking images for identification and other purposes without the requirement of a photobooth, regardless of the background of the image. The original background of the image is replaced with a preselected background. Two IR images with different intensities of IR illumination in the foreground and background regions of the scene, respectively, are compared for light intensity differences between corresponding pixels of the two images to form a mask differentiating between the foreground and background regions of the image. The mask is then applied to a visible light image of the scene and the preselected background is used to replace the original background.

US20120033876A1 discloses automatic identification of media content is at least partially based upon visually capturing a still or video image of media content being presented to a user via another device. The media content can be further refined by determining location of the user, capturing an audio portion of the media content, date and time of the capture, or profile/behavioral characteristics of the user. Identifying the media content can require (1) distinguishing a rectangular illumination the corresponds to a video display; (2) decoding a watermark presented within the displayed image/video; (3) characterizing the presentation sufficiently for determining a particular time stamp or portion of a program; and (4) determining user setting preferences for viewing the program (e.g., close captioning, aspect ratio, language). Thus identified, the media content appropriately formatted can be received for continued presentation on a user interface of the mobile device.

US20090204639A1 discloses a network- and/or client-side media content replacement system/service ("MCRS") facilitates identification and replacement of media content on media content players when defects associated with the media content players could negatively affect play of the media content. In one exemplary scenario, a media content player transmits a first message, which uniquely identifies the original media content item, to a network-based MCRS. It is determined based on the first message whether a defect associated with the media content player could negatively affect play of the original media content item, and if it is determined that play of the original media content item may be negatively affected, an alternate media content item is identified (for example, via a second message transmitted from the MCRS) to replace at least a portion of the original media content item.

### SUMMARY OF THE INVENTION

It would be advantageous to obtain a system or method for enhancing a media recording which comprises a camera recording of a scene, with the scene including a screen displaying visual content, to obtain an enhanced media recording.

The following aspects of the invention involving replacing, in the camera recording, the visual content shown on the screen with a version which is originally recorded or generated. As such, a 'digital-to-light-to-digital' conversion step may be avoided, being at least one reason for the visual content having a poor quality in the camera recording. Namely, in the camera recording, the visual content is shown after having been converted, by way of being displayed, from the digital domain to the light domain and then, by way of the camera recording, back into the digital domain.

In accordance with a first aspect of the invention, a method may be provided for enhancing a media recording, which may comprise:
- accessing the media recording, the media recording comprising a camera recording of a scene, the scene including a screen displaying visual content;
- analysing the camera recording to determine coordinates of the screen in the camera recording;
- accessing an original version of the visual content; and
- replacing, in the camera recording and using the coordinates of the screen, the visual content displayed on the screen by the original version of the visual content, thereby obtaining an enhanced media recording.

In accordance with another aspect of the invention, a computer program may be provided for causing a processor system to perform the method.

In accordance with another aspect of the invention, a system may be provided for enhancing a media recording, which may comprise:
- a first input interface for accessing the media recording, the media recording comprising a camera recording of a scene, the scene including a screen displaying visual content;
- an analysis subsystem for analysing the camera recording to determine coordinates of the screen in the camera recording;
- a second input interface for accessing an original version of the visual content; and
- a replacement subsystem for replacing, in the camera recording and using the coordinates of the screen, the visual content displayed on the screen by the original version of the visual content, thereby obtaining an enhanced media recording.

In accordance with other aspects of the invention, a sender device and a receiver device may be provided for use in the system.

The above measures involve accessing a media recording which comprises at least a camera recording of a scene. For example, a media stream may be accessed, representing an encoded version of a media recording. Another example is that a still image made by a camera may be accessed. The camera recording is of a scene which includes a screen displaying visual content. As such, the camera recording may at least intermittently show the screen displaying the visual content, or part thereof, e.g., if the screen is only partially included in the recording frame of the camera recording, or if part of the screen is covered by another object in the scene.

The camera recording may be analysed to determine a location of the screen in the camera recording. The location may be expressed as coordinates. For example, in case of a rectangular screen, the coordinates may represent one or more corners of the screen. The coordinates may take any suitable form, such as image grid coordinates (column number, row number) or normalized image coordinates.

An original version of the visual content may then be accessed. Here, the term "original version" refers to a version which is not obtained by the indirection of a camera recording of a screen displaying the visual content. Rather, an original version represents a version which is originally recorded or generated. A non-limiting example is that, if the visual content shown on the screen is obtained by play-out of a media stream, the same media stream is accessed. Another example is that a television may show a specific television channel, and a TV signal containing that same television channel, or a recorded version of the television channel, may be accessed as an original version of the visual content. Yet another example is that if the visual content shown on the screen represents a slide from a presentation, a computer file of the presentation is accessed. Compared to the camera recording of the visual content, the original version of the content may be of a higher quality in that one or more of the reasons for the visual content having a poor quality in the media recording, as enumerated in the background section, may be avoided. In particular, the original version may avoid the 'digital-to-light-to-digital' conversion step of the visual content having been converted, by way of being displayed, from the digital domain to the light domain and then, by way of the camera recording, back into the digital domain.

The visual content displayed on the screen may then be replaced in the camera recording with the original version of the visual content. For that purpose, use may be made of the coordinates of the screen. For example, the original version of the visual content may be overlaid over the screen in the camera recording, thereby replacing the recorded version of the visual content in the camera recording. Since the original version of the visual content may be better in quality than the visual content shown in the camera recording, an enhanced media recording may be obtained.

The inventors have recognized that, with the ongoing increase in digitalization, when a camera recording is obtained of a screen displaying visual content, that an original version of the visual content is normally available in digital form and may be accessed. Such an original version may be used to replace the visual content as shown on the screen in the camera recording. By replacing such camera-recorded visual content with the original version of the visual content, the quality of the visual content may be improved. A further advantage is that it may not be needed to otherwise increase the quality of the camera recording so as to better capture the visual content shown on the screen. Yet a further advantage of replacing the visual content in the camera recording is that it may not be needed to display the original version in a separate window, e.g., as an inserted picture-in-picture or side-by-side with the camera recording, which may otherwise affect the composition of the scene. For example, if the camera recording shows a presenter pointing at the visual content, such pointing is preserved and would otherwise be lost if the visual content were to be separately shown. Yet another advantage may be that one or more, or even all, of the problems associated with recording a screen, as enumerated in the background section, may be avoided.

In an embodiment, accessing the original version of the visual content may comprise:
- identifying the visual content displayed on the screen;
- based on the displayed visual content having been identified, identifying a resource location which comprises the original version of the visual content; and
- accessing the original version of the visual content from the resource location.

Although several possibilities exist for accessing the original version of the visual content, it may at times be needed or desired to identify the visual content displayed on the screen in order to access the original version of the visual content. For example, if there are multiple media streams available at a resource location, with each representing different visual content, the appropriate media stream may be retrieved after the visual content displayed on the screen has been identified. Accordingly, the visual content may first be identified, and based thereon, a resource location may identified which comprises the original version of the visual content. Here, the term 'resource' may refer to a server, storage medium, broadcast channel, etc., whereas the 'resource location' may represent information which allows the resource to be accessed, such as an internet address, for example an Universal Resource Locator (URL) address.

In an embodiment, identifying the visual content displayed on the screen may comprise:
- identifying content data of the camera recording which is associated with the visual content displayed on the screen;
- applying an automatic content recognition technique to the content data to identify said visual content.

The visual content may be identified by applying an automatic content recognition technique to the media recording. Such automatic content recognition is known per se. An advantage of using automatic content recognition may be that it may not be needed to obtain further information from the recording location, such as play-out information from a media device playing-out the visual content on the screen, to identify the visual content. Effectively, no additional information may be needed from such a media device. It is noted that the automatic content recognition may still involve information exchange with other entities, such as a content recognition database.

In an embodiment, the automatic content recognition technique may comprise determining at least one of: an audio watermark, a video watermark, or a fingerprint, of the content data. The automatic content recognition technique, e.g., when using a video watermark, may be applied only on the area of the screen as shown in the camera recording, for example using the coordinates of the screen. Any suitable automatic content recognition technique may be used as known per se from the field of automatic content recognition, including those based on watermarking and/or finger printing. It is noted that the content recognition may take additional or other information into account besides visual data. For example, the visual content may be associated with audio content which may be identifiable by making use of an audio watermark embedded in the audio content.

In an embodiment, the visual content displayed on the screen may represent a play-out by a media device, and identifying the visual content displayed on the screen may comprise obtaining play-out information from the media device which is indicative of said visual content. The visual content displayed on the screen may represent a play-out by a media device, such as a connected media player. As such, said visual content may be identified with the aid of the media device. In particular, play-out information may be used which is generated by the media device and which is indicative of the visual content. For example, the play-out information may identify a media stream including the resource location at which the media stream is available. Another example is that the play-out information may identify a program title.

In an embodiment, obtaining the play-out information may comprise:
- querying the media device via a network for the play-out information; or
- the media device sending the play-out information via the network.

With the ubiquity of connected media devices, it has become possible to obtain the play-out information from such a media device via a (local) network. For example, the media device may broadcast or otherwise send their current activity, e.g., using multicast DNS, DLNA, DIAL or other media protocols. The media device may be queried for the play-out information, e.g., using the same or similar protocols.

In an embodiment, the replacing of the visual content in the camera recording of the scene may comprise adjusting one or more visual properties of the original version of the visual content. The original version of the visual content may have an appearance which differs from the visual content in the camera recording of the scene, and in general may mismatch the appearance of the overall camera recording. As such, one or more visual properties of the original version of the visual content may be adjusted prior to, or when inserting it into the camera recording. This may provide a more pleasing, natural experience to a viewer of the media recording.

In an embodiment, the one or more visual properties may include one or more of: contrast, brightness, white balance, dynamic range, frame rate, spatial resolution, geometry, focus, 3D angle, 3D depth. The geometry of the visual content in the camera recording of the scene may be non-rectangular, e.g., due to camera distortions, the camera being misaligned with respect to the screen (e.g., not recording the screen directly face-on), etc. As such, the geometry of the original version of the visual content may be adjusted prior to, or when inserting it into the camera recording. Similarly, other visual properties may be adjusted to better match the appearance of the overall camera recording. In case the camera recording is a three-dimensional (3D) recording, also 3D parameters such as 3D angle or 3D depth may be adjusted.

In an embodiment, the media recording may be obtained by a sender device for transmission to a receiver device, the replacing of the visual content in the camera recording of the scene may be performed by the receiver device, and the method may further comprise:
- the sender device retrieving and subsequently transmitting the original version of the visual content to the receiver device; or
- the sender device transmitting metadata to the receiver device which is indicative of a resource location from which the original version of the visual content is accessible, and the receiver device retrieving the original version of the visual content from the resource location based on the metadata.

Rather than being performed by a single device, the method may also be performed using several devices, such as those of a sender/receiver system in which the media recording may be obtained by a sender device for transmission to a receiver device, with the receiver device then replacing the visual content in the camera recording of the scene with the original version of the visual content. An example of such a system is a videoconferencing system. In this particular example, each videoconferencing client may act both as a sender device for the transmission of a locally recorded media stream, and as a receiver device for the reception of remotely recorded media stream(s). However, there may also be a unilateral transmission of a media recording from a sender device to a receiver device. In general, several possibilities exist for the receiver device being enabled to retrieve the original version of the visual content from the resource location. For example, the sender device may retrieve and subsequently transmit the original version of the visual content to the receiver device, or may transmit metadata to the receiver device which is indicative of a resource location from which the original version of the visual content is accessible. In general, the receiver device may be a play-out device for playing out the enhanced media recording. However, the receiver device may also be an intermediate device further transmitting the enhanced media recording to one or more play-out devices.

In an embodiment, the sender device may comprise:
- the first input interface for accessing the media recording; and
- the analysis subsystem for analysing the camera recording to determine the coordinates of the screen in the camera recording.

In an embodiment, the receiver device may comprise:
- the second input interface for accessing the original version of the visual content; and
- the replacement subsystem for replacing, in the camera recording and using the coordinates of the screen, the visual content displayed on the screen by the original version of the visual content, thereby obtaining an enhanced media recording.

In an embodiment, the method may further comprise the sender device including in the metadata the coordinates of the screen in the camera recording. As such, it may not be needed anymore for the receiver device to determine coordinates of the screen in the camera recording, as such coordinates may have been determined and made available by the sender device. Metadata to this effect may be provided.

In an embodiment, the receiver device may, in addition to the second input interface and the replacement subsystem, further comprise:
- the first input interface for accessing the media recording; and
- the analysis subsystem for analysing the camera recording to determine the coordinates of the screen in the camera recording.

As such, the receiver device may carry out all claimed operations. For example, the receiver device may use an automated content recognition technique to identify the visual content that is to be replaced, retrieve an original version of the visual content, and insert this original version into the camera recording.

It will be appreciated by those skilled in the art that two or more of the above-mentioned embodiments, implementations, and/or aspects of the invention may be combined in any way deemed useful.

Modifications and variations of the method and/or the computer program product, which correspond to the described modifications and variations of the system, can be carried out by a person skilled in the art on the basis of the present description.

### BRIEF DESCRIPTION OF THE DRAWINGS

These and other aspects of the invention are apparent from and will be elucidated with reference to the embodiments described hereinafter. In the drawings,
Fig. 1A illustrates a recording device, in the form of a video camera, recording a scene which includes a person and a screen displaying visual content;
Fig. 1B shows the resulting camera recording, in which the visual content as displayed on the screen is shown to have a sub-optimal quality;
Fig. 2 shows a method of enhancing a media recording, in which the visual content displayed on the screen is replaced by an original version of the visual content, thereby obtaining an enhanced media recording;
Fig. 3 shows a computer program product comprising instructions for causing a processor system to perform the method;
Fig. 4 shows a system for enhancing a media recording, in which the visual content displayed on the screen is replaced by an original version of the visual content, thereby obtaining an enhanced media recording;
Fig. 5 shows a recording device making available a media recording of a scene, the scene including a screen displaying visual content, and a sender device using the media recording to generate metadata which is indicative of a resource location which comprises an original version of the visual content;
Fig. 6 shows a receiver device receiving the metadata from the sender device, with the metadata being used to access the original version of the visual content so as to replace the content displayed on the screen in the media recording;
Fig. 7 shows a system for enhancing a media recording, in which a media device playing-out the visual content provides the visual content directly to the system;
Fig. 8A shows an example of the system actively polling the network so as to discover the presence of media devices in the network; and
Fig. 8B shows an example of the media device multicasting its presence to the system via a notification message;

It should be noted that items which have the same reference numbers in different Figures, have the same structural features and the same functions, or are the same signals. Where the function and/or structure of such an item has been explained, there is no necessity for repeated explanation thereof in the detailed description.

### List of reference numerals

The following list of reference numbers is provided for facilitating the interpretation of the drawings and shall not be construed as limiting the claims.
- 010: screen displaying visual content
- 012: media device
- 015: person

- 020: recording device
- 022: field of view of recording device

- 030: media recording
- 030X: media stream of media recording
- 032: camera recording of scene
- 034: camera recorded visual content as displayed on screen

- 040: enhanced media recording
- 042: enhanced camera recording of scene

- 050: communication to replacement subsystem
- 052: metadata

- 060: original version of visual content
- 060X: media stream representing original version
- 062: adjusted version of visual content
- 064: resource location information

- 100: system for enhancing media recording
- 110: first input interface
- 120: analysis subsystem
- 130: second input interface
- 140: replacement subsystem
- 142: renderer of replacement subsystem
- 144: scene compositor of replacement subsystem
- 200: method of enhancing media recording
- 210: accessing media recording
- 220: analysing camera recording
- 230: accessing original version of visual content
- 240: replacing visual content displayed on screen

- 250: computer readable medium
- 260: computer program stored as non-transitory data

- 300: sender device comprising analysis subsystem
- 400: receiver device comprising replacement subsystem

### DETAILED DESCRIPTION OF EMBODIMENTS

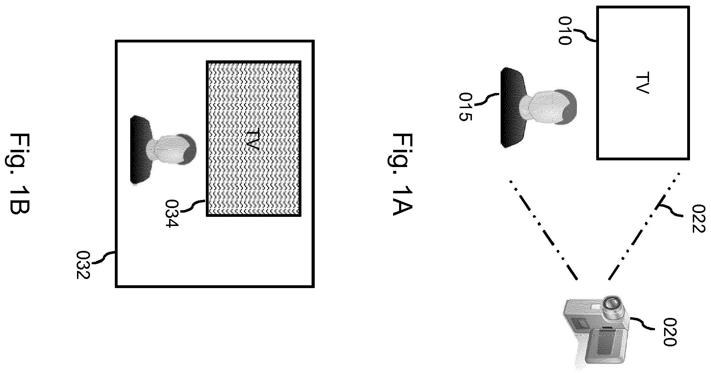

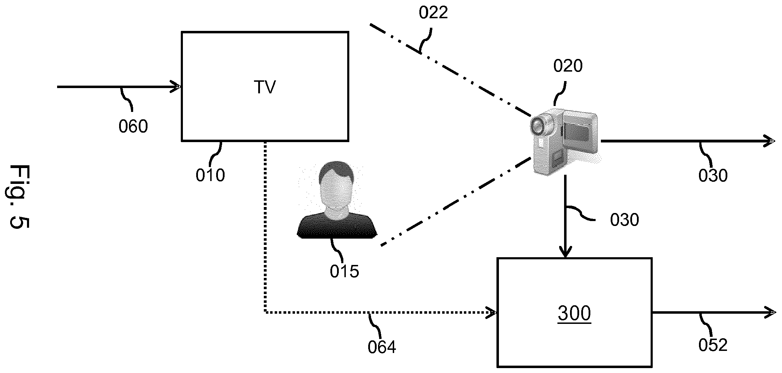

The following embodiments of a system and method involving replacing, in the camera recording, the visual content shown on the screen with a version which is originally recorded or generated. As such, an (much) improved quality of the visual content in the camera recording may be obtained. A general explanation is provided with reference to Figs. 1-4, whereas Figs. 5-7 show specific embodiments. None of the embodiments is to be understood as representing limitations of the invention.

Fig. 1A illustrates a recording device 020, in the form of a camera, recording a scene which includes a person 015 and a screen 010 displaying visual content. In this example and in following examples, the screen 010 is shown to be, by way of example, that of a television 010, and is thus indicated as 'TV' in the Figures. However, this is not a limitation, in that the screen 010 may take any suitable form, as also indicated in following paragraphs. The field of view 022 of the camera 020 is schematically indicated. Fig. 1B shows the resulting camera recording 032. It can be seen that the person as well as the television is shown in the camera recording 032. However, as also symbolically indicted by a pattern covering the screen 010, the visual content 034 as displayed on the screen has a sub-optimal quality in the camera recording 032. Possible reasons for this have been set out in the background and introductory sections. One particular reason is the 'digital-to-light-to-digital' conversion step, as the visual content 034 is shown in the camera recording 032 after having been converted, from the digital domain to the light domain by the television 010 and then, by way of the camera 020 recording the scene, back into the digital domain.

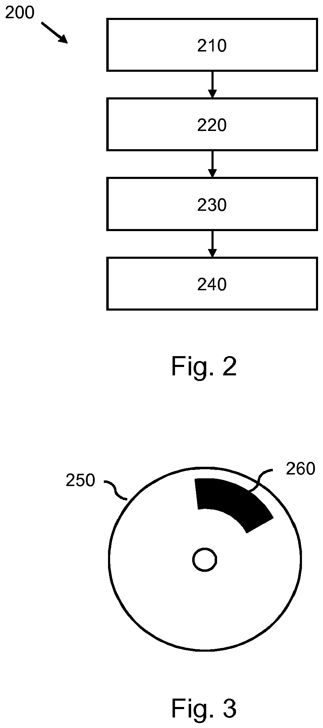

Fig. 2 shows a method 200 of enhancing a media recording, in which the visual content displayed on the screen is replaced by an original version of the visual content, thereby obtaining an enhanced media recording. The method 200 comprises, in an operation 210 titled "ACCESSING MEDIA RECORDING", accessing the media recording, the media recording comprising a camera recording of a scene, the scene including a screen displaying visual content. The method 200 further comprises, in an operation 220 titled "ANALYSING CAMERA RECORDING", analysing the camera recording to determine coordinates of the screen in the camera recording. The method 200 further comprises, in an operation 230 titled "ACCESSING ORIGINAL VERSION OF VISUAL CONTENT", accessing an original version of the visual content. The method 200 further comprises, in an operation 240 titled "REPLACING VISUAL CONTENT DISPLAYED ON SCREEN", replacing, in the camera recording and using the coordinates of the screen, the visual content displayed on the screen by the original version of the visual content, thereby obtaining an enhanced media recording. It is noted that, although Fig. 2 shows the above operations 210-240 being performed sequentially, the operations may be performed in any suitable order, e.g., consecutively, simultaneously, or a combination thereof, subject to, where applicable, a particular order being necessitated, e.g., by input/output relations.

It will be appreciated that a method according to the invention may be implemented in the form of a computer program which comprises instructions for causing a processor system to perform the method. The method may also be implemented in dedicated hardware, or as a combination of the above.

The computer program may be stored in a non-transitory manner on a computer readable medium. Said non-transitory storing may comprise providing a series of machine readable physical marks and/or a series of elements having different electrical, e.g., magnetic, or optical properties or values. Fig. 3 shows a computer program product comprising the computer readable medium 250 and the computer program 260 stored thereon. Examples of computer program products include memory devices, optical storage devices, integrated circuits, servers, online software, etc.

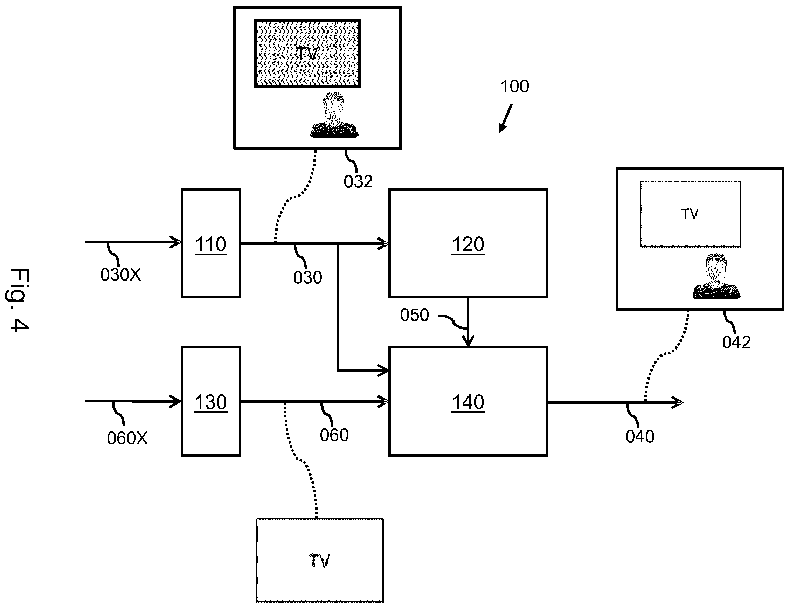

Fig. 4 shows a system 100 for enhancing a camera recording, in which the visual content displayed on the screen is replaced with an original version of the visual content, thereby obtaining an enhanced camera recording. The operation of the system 100 may correspond to the performing of the method 200 of Fig. 2, and vice versa.

It is noted that the camera recording may be part of an overall media recording, which may comprise additional components, such as, e.g., subtitle overlays, additional audio tracks, various metadata, etc. However, the media recording may also solely consist of the camera recording. As such, both terms may be used interchangeably where appropriate. It is further noted that the camera recording may be video, but may equally comprise, or be comprised of, one or more still images.

The system 100 is shown to comprise a first input interface 110 for accessing the media recording 030. The first input interface 110 may take any suitable form, such as network interface to a local or wide area network, a storage interface to an internal or external data storage, etc. The media recording 030 may be pre-recorded, but may also be a real-time, 'live' stream. As also shown in Fig. 4, the first input interface 110 may optionally comprise a decoder for decoding a media stream 030X of the media recording 030, thereby making available the media recording 030, or parts thereof, in an uncompressed or, in general, other format. For example, the decoder may make available one or more video frames of the camera recording 032.

The system 100 is further shown to comprise an analysis subsystem 120 for analysing the camera recording. Such analysis may involve determining coordinates of the screen in the camera recording. However, as will be elucidated in following paragraphs, the analysis subsystem 120 may also have other, e.g., additional, functionality. The coordinates may be determined through image analysis techniques, as known per se from the field of image analysis. Examples of such techniques are described in following paragraphs with reference to the tracking of screens.

The system 100 is further shown to comprise a second input interface 130 for accessing an original version of the visual content. Like the first input interface 110, the second input interface 130 may be of any suitable type, such as a network interface to a local or wide area network, a storage interface to an internal or external data storage, etc. Said original version 060 may be pre-recorded, but may also be a real-time, 'live' stream. As also shown in Fig. 4, the second input interface 130 may optionally comprise a decoder for decoding a media stream 060X of the original version 060 of the visual content, thereby making available said original version 060, or parts thereof, in an uncompressed format, or in general, other format. For example, the decoder may make available one or more image frames of said original version 060, or a part of said image frame(s) if the coordinates of the screen are made available to the decoder. If the camera recording is obtained in a form which does not necessitate the use of a decoder, the second interface 130 may make available said image frame(s).

The system 100 is further shown to comprise a replacement subsystem 140 for replacing, in the camera recording 032 and using the coordinates of the screen, the visual content displayed on the screen by the original version 060 of the visual content, thereby obtaining an enhanced camera recording 042 and thus an enhanced media recording 040. For that purpose, the replacement subsystem is shown to receive the original version 060 of the visual content from the second input interface 130 and the media recording 030 from the first input interface 110. However, as will be shown with reference to Figs. 5-7, the replacement subsystem may also receive the media recording 030 from a different source. The analysis subsystem 120 is further shown to communicate data 050 to the replacement subsystem 140, which may include the coordinates of the screen as were determined by the analysis subsystem 120.

### General aspects

In general, embodiments of the system and method may comprise:
- Detecting screens that are entirely, partially or potentially present in the camera recording, e.g., by analysing the camera recording or via other mechanisms,
- Identifying whether a detected screen displays visual content, and if so, which visual content,
- Resolving an original version of the visual content, e.g., by determining a suitable resource location which comprises the original version of the visual content;
- Processing the original version of the visual content to spatially (e.g., geometrically) and/or temporally align it with the camera recording;
- Tracking the screens in the camera recording, e.g., by detecting their coordinates, and storing tracking data in associated metadata, so as to enable the visual content in the camera recording to be replaced by said original version; and
- Replacing the visual content in the camera recording with the original version of the visual content using the generated metadata.

When relating to the analysis of the camera recording, such functions may be performed by the analysis subsystem, and otherwise by the replacement subsystem. For example, the analysis subsystem may detect a media device which is assumed to be rendering the visual content on the screen. It is noted that in some cases, the screen may comprise the media device or vice versa, such as in the case of a television having integrated media player functionality. However, in other cases, the media device may be directly or indirectly connected to the screen. Examples of media devices include, but are not limited to, televisions, monitors, projectors, media players and recorders, set-top boxes, smartphones, cameras, PCs, laptops, tablet devices, smart watches, smart glasses, professional video equipment, etc.

### Detecting the media device

Detecting the media device playing-out the visual content may comprise one or more of:
- An image analysis technique may be used to detect the media device in the camera recording itself. The image analysis technique may be locally performed by the analysis subsystem, or remotely by the analysis subsystem forwarding the camera recording to a remote image analysis component. An example of such a remote image analysis component is http://idtv.me/. Suitable image analysis techniques are known per se from the fields of image analysis and computer vision, described in, e.g., *"*Computer Vision: Algorithms and Applications" by Richard Szelisk, 2010, consulted on 15 April 2015 at http://szeliski.org/Book/drafts/SzeliskiBook_20100903_draft.pdf.
- The media device may announce its activity on a local network, for example using multicast DNS, DLNA, DIAL or other media protocols. As an example, such an announcement may be a message comprising "playing channel 1"; URL = ...".
- The analysis subsystem may query media devices for their presence and activities, e.g., via a local network.
- A user may manually configure the presence and/or activities of media devices, e.g., via a graphical user interface.

### Identifying the visual content

Identifying the visual content played-out by the media device may comprise one or more of:
- The media device may signal which media is being played-out, e.g., by signalling a TV channel identifier ("BBC 1"), or may be queried for this information.
- The media device may provide additional information about the media source, such as an URL to the source of the media ("http://webserver/BBC1.mpd").
- The visual content may be identified by the analysis subsystem identifying content data of the camera recording which is associated with the visual content displayed on the screen, and subsequently applying an automatic content recognition technique to the content data to identify said visual content. The automatic content recognition technique may comprise determining one or more of: an audio watermark, a video watermark, or a fingerprint, of the content data. This may require an index of such content with the appropriate type of identifier.
- The user may manually provide the media source, e.g., by providing a link to a media device presenting the source of the visual content being played-out.

It is noted that the visual content may be described as metadata, for instance using a Television Domain Name System (TV-DNS) system (http://www.w3.org/TR/TVWeb-URI-Requirements, http://tools.ietf.org/html/rfc2838), and may thus be announced, signalled or stored in the form of such metadata.

In cases the camera recording is a video recording rather than, e.g., a still image, the analysis subsystem may track the screen in the video recording, or may track the media device in the video recording, e.g., in case the screen is comprised in the media device. Here, the term tracking may refer to one or more coordinates of the screen being identified over time, e.g., in different image frames. Such tracking may enable the spatially accurate replacement of the visual content shown on the screen. Namely, the camera and the screen may mutually move over time, causing the screen to be located at different image coordinates. To track the screen, image and/or object tracking techniques may be used, as are well known in the art and widely available. For example, the CDVS standard, ISO/IEC FDIS 15938-13 (the most recent published version as of the time of invention), provides the means of extracting visual features from images (key points and their coordinates) and compressing them in a compact bit-stream. The tracking data may be stored as associated metadata to the recording. The metadata may also contain device motion information, timing information (e.g. for synchronization purposes), occlusion information. The annotations pertaining to the video may be expressed using the MPEG-7 standard ISO/IEC 15938-3 which allows spatio-temporal annotations. For example, this standards allows to express the coordinates of a region, e.g. an object, over multiple frames, i.e. from time t₁ to time t₂ of the video, which may be used for tracking the screen in the video recording.

### Accessing an original version of the visual content

Accessing an original version of the visual content may involve the media device itself providing said original version of the visual content, for example, by streaming a media stream in the form of an MPEG-DASH stream. Alternatively or additionally, a resource location may be identified which comprises said original version. For example, metadata made available to the replacement subsystem may contain a brief identification of the TV Channel which is being played-out on the screen in the camera recording, e.g., the identifier "BBC 1". The replacement subsystem may then identify and access the channel "BBC 1", e.g., via an Internet Protocol Television (IPTV) service, from which a media stream of the visual content may be accessed.

### Replacing the visual content

Having obtained access to the original version of the visual content, the visual content displayed on the screen may be replaced by the original version of the visual content, thereby obtaining an enhanced media recording. Such replacement may be, but does not need to be, performed in real-time and in a synchronized manner, so that the visual content in the enhanced media recording is synchronized, to at least a certain degree, with the visual content previously shown in the media recording. Said synchronization aspects will be further elucidated with reference to 'time alignment'.

The replacing of the visual content displayed on the screen by the original version of the visual content may be performed in a number of ways. For example, the replacement subsystem may overlay or otherwise insert the original version of the visual content into the camera recording. It is noted that such replacing may not need to be pixel accurate, nor does it need to fully replace the visual content displayed on the screen. For example, the original version of the visual content may be alpha-blended into the camera recording, with a residual of the camera-recorded visual content (e.g., a 1-alpha weighted residual) thus remaining in the camera recording.

It is noted that if the visual content is obtained from play-out of a particular version of the visual content, e.g., a particular media stream, the replacement is not limited to the replacement by the particular version being played-out, but may rather involve a different version. For example, the replacement may be by a processed version having been sampled-down or having a lower bitrate. Such a processed version may not affect the perceived quality or may even enhance the perceived quality, as will be further elucidated with reference to 'Video conferencing aspects'.

The replacement may be performed at various stages. For example, the replacement may be already performed in the recording device itself, such that an encoded version of the media recording contains the original version. Another way is to have a receiver device access both the media recording and the original version of the visual content, and insert the original version into the media recording. This aspect will be further elucidated in the following paragraphs. The replacement may also be performed during play-out of the media recording. As such, the enhanced media recording may not be separately stored but rather may be generated 'on the fly'.

### System partitioning

It will be appreciated that the analysis subsystem and the replacement subsystem may be part of a single device. However, both subsystems may also be part of different devices, or may be implemented in a distributed manner. A non-limiting example is that of a sender/receiver system in which, at a sender side, the media recording may be obtained by a sender device for transmission to a receiver device, with, at a receiver side, the receiver device then replacing the visual content in the camera recording of the scene with the original version of the visual content. Here, the sender device may comprise the first input interface and the analysis subsystem, and the receiver device may comprise the second input interface and the replacement subsystem. A non-limiting example of such a system is a videoconferencing system.

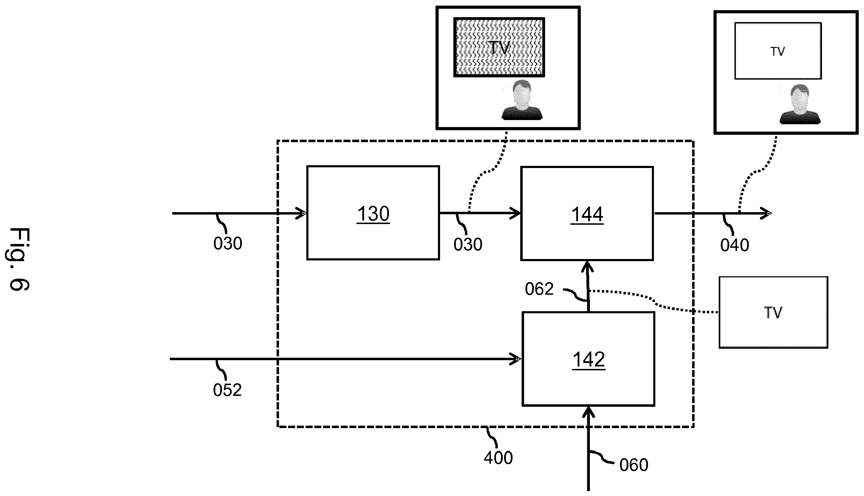

Fig. 5 shows an example of the sender side of such a system. Herein, a scene is shown which includes a person 015 and a screen 010 displaying visual content. In the example of Fig. 5, the screen 010 is that of a television receiving and playing-out visual content 060. A recording device 020 is shown recording the scene. As in Fig. 1, the field of view 022 of the recording device 020 is schematically indicated in Fig. 5. The recording device 020 is shown to make available the resulting media recording 030 to a sender device 300 and, as will be shown with further reference to Fig. 6, to a receiver device 400. Such making available may take any suitable form, including direct forms such as streaming the media recording, as well as indirect forms in which the media recording is intermittently stored, processed, etc.

Generally speaking, the sender device, the screen and the recording device may be co-located, e.g., in a same room, same building, same outside area. However, this is not a requirement, in that the sender device 300 may be located at the sender side, e.g., at a 'sending' location, whereas the screen may be located and recorded by the recording device elsewhere, e.g., at a third location, i.e., a 'recording' location.

Fig. 5 further shows the television 010 making available resource location information 064 to the sender device 300. Such resource location information 064 may enable the original version 060 of the visual content being played-out to be accessed, and may take any suitable form as discussed throughout this specification. For example, the television 010 may announce that it is playing out the visual content via a network message comprising a URL referring to a manifest file. This manifest file may be a Media Presentation Description (MPD) file of MPEG DASH providing various information about a media stream, an example of which being a URL such as 'http://example.com/description-of-resource.mpd'. Another example is that the television may advertise a communication channel endpoint, such as a WebSocket (rfc6455, The WebSocket Protocol) endpoint, via which the television may directly deliver the MPD.

The sender device 300, and particularly its analysis subsystem, may analyse the camera recording comprised in, or represented by the media recording 030, to determine coordinates of the screen in the camera recording. For that purpose, the earlier described tracking techniques may be used. The sender device 300 may then format and make available these coordinates as metadata 052. Specific examples of such metadata will be given in following paragraphs. As part of the metadata 052, the sender device 300 may include the resource location information 064.

Fig. 6 shows an example of the receiver side. Herein, a receiver device 400 is schematically shown, comprising an input interface 130 for receiving the media recording 030, and a replacement subsystem being partitioned into a renderer 142 and a scene compositor 144. The render 142 is shown to receive the metadata 052 generated by the sender device 300 and to access, based on e.g., resource location information included in the metadata 052, the original version 060 of the visual content. Based on the coordinates of the screen, as obtained from the metadata 052, the renderer 062 may then adjust one or more visual properties of the original version 060 of the visual content, such as its geometry, so as to better fit the visual content displayed on the screen in the media recording 030. Various other aspects of said original version 060 may be adjusted as well, including but not limited to contrast, brightness, white balance, dynamic range, frame rate, spatial resolution, focus, 3D angle, 3D depth. To match said visual properties to those of the media recording 030, the renderer 142 may receive information concerning said properties, e.g., from the analysis subsystem of the sender device, or may itself access and analyse the media recording 030 (not shown explicitly in Fig. 6) within the receiver device 140. Having adjusted the original version 060 of the visual content, thereby obtaining an adjusted version 062 thereof, the scene compositor 144 may then replace the visual content displayed on the screen in the media recording 030 by said adjusted original version 062 of the visual content, thereby obtaining an enhanced media recording 040.

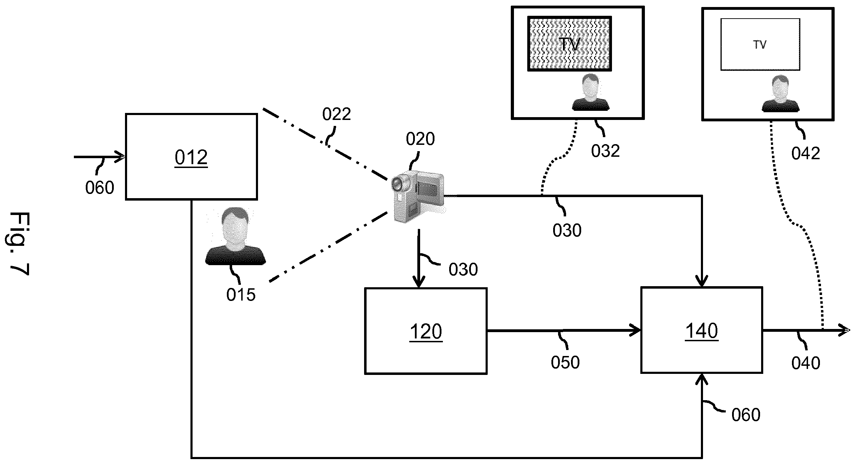

Fig. 7 shows another example of a system for enhancing a media recording, in which the visual content displayed on the screen is replaced by an original version of the visual content, thereby obtaining an enhanced media recording. Herein, the analysis subsystem 120 and replacement subsystem 140 are shown, while omitting, for sake of brevity, the respective input interfaces as shown earlier in Fig. 2. Both subsystems may be part of a single device, or, as earlier shown with reference to Figs. 5 and 6, may also be part of different devices, or may be implemented in a distributed manner. In this example, a media device 012 is shown which plays-out visual content 060. Although not shown explicitly in Fig. 7, the media device 012 may comprise a screen, or may be connected to a screen, with the screen then being recorded by the recording device 020. As opposed to the media device of Fig. 5, i.e., the television 010, the media device 012 of Fig. 7 is shown to directly provide the original version 060 of the visual content to the replacement subsystem 140, rather than providing (only) resource location information. For example, the media device 012 may stream said original version 060, after having announced the play-out to the replacement subsystem 140 or the replacement subsystem 140 having discovered the play-out of the media device 012. Compared to Figs. 5 and 6, the replacement subsystem 120 may thus obtain the original version 060 of the visual content directly from the media device 012 which is responsible for the play-out of the visual content on the screen.

### Discovery

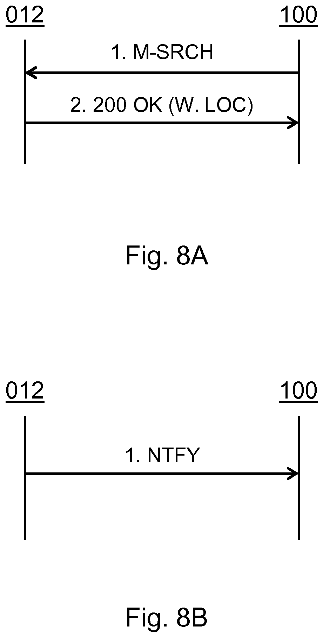

Figs. 8A and 8B relate to different discovery mechanisms which may be employed for discovering the media content being played-out by a media device, so as to discover the visual content shown on the screen in the camera recording. Fig. 8A shows an example of the system actively polling the network so as to discover the presence of media devices in the network, while Fig. 8B shows an example of the media device multicasting its presence to the system via a notification message.

Actively polling the network can be based on various protocols. One example is the UPnP protocol. Here, M-SEARCH is used to first discover devices in the local network, either directly or through a UPnP server. An example of a discovery message is shown below. This is a general discovery message for discovering all UPnP devices. Instead of searching for all devices with ssdp:all, also discovery messages can be sent for specific devices, e.g., for media renderers. A display device, e.g. a television, in UPnP would typically be a media renderer.

An M-SEARCH is multicasted on the local network, specifying what is looked for, in this case all devices. In Fig. 8A, this is schematically indicated by the arrow titled '1. M-SRCH' pointing from the system 100 to the media device 012.
*M-SEARCH* * *HTTP*/*1.1*
*HOST: 239.255.255.250:1900*
*MAN: "ssdp:discover"*
*MX: 2 (seconds to delay response)*
*ST: ssdp:all (search for all devices)*
*USER-AGENT: Android*/*4.3 UPnP*/*1.1 Smartphone* /*3.0 (example values)*

The response may be a 200 OK message containing information on the device that responds, in this case the media device 012 being a MediaRenderer.
HTTP/1.1 200 OK
CACHE-CONTROL: max-age = 1800
DATE: Sun, 22 Mar 2015 08:49:37 GMT
EXT:
   LOCATION: http://192.168.1.5/description
SERVER: android/4.3 UPnP/1.1 television/1.0
ST: ssdp:all
USN: uuid:2fac1234-31f8-11b4-a222-08002b34c003:: urn:schemas-upnp-org:service:MediaRenderer:1
BOOTID.UPNP.ORG: 1426860725
CONFIGID.UPNP.ORG: 123456
SEARCHPORT.UPNP.ORG: 49152

Alternatively or additionally, as shown in Fig. 8B, the media device 012 may also multicast its presence occasionally, which may be detected by the system 100. An example of an advertising message is shown below. This message is similar in content to the 200 OK message when responding to an M-SEARCH, and indicated in Fig. 8B by the arrow titled '1. NTFY' pointing from the media device 012 to the system 100.
NOTIFY * HTTP/1.1
HOST: 239.255.255.250:1900
CACHE-CONTROL: max-age = 1800
LOCATION: http://192.168.1.5/description
NT: urn:schemas-upnp-org:service:MediaRenderer:1
NTS: ssdp:alive
SERVER: android/4.3 UPnP/1.1 television/1.0
USN: uuid:2fac1234-31f8-11b4-a222-08002b34c003:: urn:schemas-upnp-org:service:MediaRenderer: 1
BOOTID.UPNP.ORG: 1426860725
CONFIGID.UPNP.ORG: 123456
SEARCHPORT.UPNP.ORG: 49152

Note that the examples of Figs. 8A and 8B are within the context of UPnP, while there exist various discovery protocols which can all be used instead.

### Signalling screen coordinates

With further reference to the analysis subsystem detecting the coordinates of the screen in the camera recording, these coordinates may be signalled to others, such as the replacement subsystem. This signalling may involve the analysis subsystem formatting and making available the coordinates in the form of metadata. Such metadata may be generated by encoding the detected screen in X and Y coordinates. However, even though a screen is usually rectangular, a screen may be also recorded at an angle. In such a case, the coordinates may represent all four corners of the screen. Also, the information about the visual content may be detected and signalled to others. Below is an example of such metadata in XML.

```
            <display information
                <content displayed>
                        <id="NOS Studio Sport">
                        <URL="http://www.npo.nl/live">
                </content displayed>
            <display coordinates>
            <top left corner>
            <x=100>
            <y=400>
            </top left corner>
            <top right corner>
             <x=1500>
            <y=500>
            </top right corner>
            <bottom left corner>
                <x=100>
                <y=1100>
            </bottom left corner>
            <bottom right corner>
                <x=1500>
                <y=1000>
            </bottom right corner>
            </display coordinates>
            </display information>
```

It is noted that the above XML-based metadata is shown to indicate the coordinates of a rectangular screen. For other types of screens, more or less metadata may need to be supplied. For example, smartwatches may have round displays which may appear oval when captured from an angle. In such a case, a coordinate for the center may be detected and signalled, as well as parameters describing the circle or oval. For curved screens, the top and bottom of the screen may not be straight lines. As such, in addition to coordinates of the corners, parameters may be detected and signalled describing the curvature. For holographic projections or light field displays, 3D coordinates may be used to describe the area where the 3D images are displayed. The screen may also be partially occluded in the camera recording, or only be partially shown in the field of view of the recording device. As such, the coordinates may also describe a polygon representing the non-occluded, visible part of the screen.

It is noted that for formatting and making available the coordinates in the form of metadata, the ISO/IEC standard 23001-10 titled Carriage of Timed Metadata Metrics of Media in ISO Base Media File Format' may be used. Although at the time of writing this standard only contains timed metadata relative to MPEG Green standard (see ISO/IEC 23001-11) and visual quality metrics such as PSNR, MPEG have started the process to amend 23001-10 to add the carrying of 2D coordinates as well.

### Time alignment

When replacing the visual content displayed on the screen by the original version of the visual content, the replacement may use the detected coordinates of the screen as the place to insert the original version. But, such replacing may also have a temporal aspect, as videos change over time. Accordingly, the insertion of the original version may be synchronized with the displayed visual content in the camera recording, in that exactly same content may be shown after replacement as before. This may involve identifying a playout point in the camera recording, and identify this same playout point in the original version, and use this during replacement. For that purpose, any known technique from media synchronization may be used, including buffering and seeking ahead in a video. It is noted that in some cases, for example where a presenter interacts with the visual content shown on the screen, it may be desired to synchronize the original version to a relatively high degree with the camera recording, e.g., having a remaining difference in the magnitude of tens or hundreds of millisecond. However, in many cases, the exact timing is of lesser importance, and the insertion of the original version may shift somewhat in time compared to the displayed visual content in the recording. As an example, the screen may show a TV channel, e.g., channel 'NPO1'. If this TV channel is accessed for replacement, the currently available play-out may be used. This may be different in play-out timing from the displayed visual content in the camera recording, as TV channels' play-out may vary at various locations, depending on TV provider, distribution technology used, transcoding during distribution, etc. Such differences are usually in the order of magnitude of several seconds, and may be as large as a minute. As such, the enhanced version of the media recording may differ somewhat in timing of the visual content shown on the screen in the scene.

### Adjustment of visual properties

With further reference to the adjustment of one or more visual properties of the original version 060 of the visual content, as earlier described with reference to Fig. 6, the original version of the visual content may need to be adapted before its insertion into the media recording. This may involve an analysis of the overall scene properties, e.g. through a histogram analysis, and an adjustment of the original version of the visual content so as to align its visual properties with the recorded scene. Various image analysis and image processing techniques may be used, as described, e.g., in "Computer Vision: Algorithms and Applications" by Richard Szelisk, 2010, consulted on 15 April 2015 at http://szeliski.org/Book/drafts/SzeliskiBook 20100903 draft.pdf, for examples, in chapters 3.1 (point operators) and 3.6 (geometric transformations). Alternatively, if the original version of the visual content already has the desired visual properties, it may directly be used to replace the visual content shown on screen.

### Efficiently encoding the media recording

The visual content shown on screen in the media recording is to be replaced by an original version of the visual content. As such, when encoding the media recording before said replacement occurs, e.g., for transmission or storage, the media recording may be encoded in an optimized manner to obtain a higher coding efficiency. The following describes two possible actions, which may also be combined.

A first action is the pre-processing of the media recording, which may involve making the area representing the displayed visual content easy to encode. This way, the area will account for fewer bits in the encoded bit stream. A possible way of doing so is to substitute all pixel values in this area of the captured video frames by a same pixel value, e.g., 'zero' or black. Namely, uniform areas are efficiently encodeable for encoders when leveraging intra prediction or block matching mechanisms.

A second action is a so-termed region-of-non-interest coding. Numerous encoders, regardless of the video coding standard, offer the possibility to define regions in the video frame for which more or less quality (more or less bits) should be allocated. Within the present context, it may be beneficial to assign a poor quality to the area representing the displayed visual content. Generally, the quality of this region is tuned via the Quantization Parameter (QP). The higher the QP, the lower the quality of the encoded stream. By locally applying higher QPs to this region, one can achieve this region of 'non-interest' coding of the visual content displayed on screen.

A third action may constitute an alternative to the second action, which may require a modified encoder. Namely, one may consider not encoding what it is not needed. In this case, the coordinate of the region to discard, i.e., the area representing the displayed visual content, may be used directly by the encoder to leave them out when encoding the video stream. Effectively, the output bit stream may then contain frames with "holes". Such discarding of regions may be involve use of High Efficiency Video Coding (HEVC) tiles. For example, assuming there is only one screen shown in the camera recording, the recording device may define a tiling grid for the HEVC encoder in such a way that the tiles representing the screen may be discarded during the encoding process. The tiling grid might adjusted dynamically based on the position of the screen. Alternatively, the tiling grid might be static and the tiles that contain only the pixels from the visual content displayed on screen may be discarded.

### Video conferencing aspects

It is noted that, in a video conferencing scenario, it may not be needed to use the same stream that user A sees for user B; if the screen presenting the recording for user B is small, or is provided in a low resolution, it might suffice to retrieve a low bitrate version of the visual content to be displayed in the view of user B. Here and in the following, a reference to user A is understood to be a reference to his/her sender device, and a reference to user B is understood to be a reference to his/her receiver device. Example: User A watches a full HD TV channel (1920x1080 pixels) on his/her large-screen TV, involving a bit rate of 10Mbit/s. User B only sees a scaled down version of the TV of user A in his recorded view so a lower resolution version (SD) may suffice to get an acceptable result. It is noted that this may also in general apply to the visual content being played-out from a media stream, in that it may not be needed to retrieve the same media stream in order to replace the visual content shown in the screen in the camera recording. Rather, a different, e.g., lower bitrate version may be retrieved. Still a higher quality may be obtained, e.g., by avoiding the digital-to-light-to-digital conversion step. With further reference to a video conferencing scenario, user A and user B may access the same media stream by said media stream being efficiently distributed amongst them, e.g., by distribution via multicast or peer-to-peer (P2P). The system may also detect or resolve that the resource user A is watching is also available for user B, but via a different route. Example: User A is watching the TV channel 'NPO1' via a subscription of TV provider A; the system may then detect that user B can access a media stream of said TV channel via a subscription of IPTV provider B, so that it is not needed to transfer the media stream from user A to user B.

### Other general aspects

It is noted that if camera recording shows a screen from a PC, tablet or smartphone or other type of computing device, the screen capture functionality of said computing device may be used as a media source for the original version of the visual content, in that screen capture(s) may be accessed and used in replacing the visual content displayed on the screen in the camera recording.

It is noted that the analysis subsystem and/or the replacement subsystem may be embodied as, or in, a single device or apparatus, such as the recording device or another user device. The device or apparatus may comprise one or more microprocessors which execute appropriate software. The software may have been downloaded and/or stored in a corresponding memory, e.g., a volatile memory such as RAM or a non-volatile memory such as Flash. Alternatively, the analysis subsystem and/or the replacement subsystem may be implemented in the device or apparatus in the form of programmable logic, e.g., as a Field-Programmable Gate Array (FPGA). In general, each functional unit of the system may be implemented in the form of a circuit. It is noted that the analysis subsystem and/or the replacement subsystem may also be implemented in a distributed manner, e.g., involving different devices or apparatuses. For example, the analysis subsystem and/or the replacement subsystem may be implemented as a software-based function being performed by entities within a media distribution network, such as servers.

## Claims

1. A method of enhancing a media recording (030), comprising:
- accessing (210) the media recording, the media recording comprising a camera recording of a scene (032),
**characterised by** the scene including a screen displaying visual content (034); and the method further comprising:
- analysing (220) the camera recording of the scene to determine the location of the screen in the camera recording of the scene by determining coordinates of the screen in the camera recording of the scene;
- accessing (230) an original version of the visual content (060); and
- replacing (240), in the camera recording of the scene and using the coordinates of the screen, the visual content displayed on the screen by the original version of the visual content, thereby obtaining an enhanced media recording (040).

2. The method according to claim 1, wherein accessing the original version of the visual content comprises:
- identifying the visual content displayed on the screen;
- based on the displayed visual content having been identified, identifying a resource location which comprises the original version of the visual content; and
- accessing the original version of the visual content from the resource location.

3. The method according to claim 2, wherein identifying the visual content displayed on the screen comprises:
- identifying content data of the camera recording which is associated with the visual content displayed on the screen;
- applying an automatic content recognition technique to the content data to identify said visual content.

4. The method according to claim 3, wherein the automatic content recognition technique comprises determining at least one of: an audio watermark, a video watermark, or a fingerprint, of the content data.

5. The method according to claim 2, wherein the visual content displayed on the screen represents a play-out by a media device, and wherein identifying the visual content displayed on the screen comprises obtaining play-out information from the media device which is indicative of said visual content.

6. The method according to claim 5, wherein obtaining the play-out information comprises:
- querying the media device via a network for the play-out information; or
- the media device sending the play-out information via the network.

7. The method according to any one of the above claims, wherein the replacing of the visual content in the camera recording of the scene comprises adjusting one or more visual properties of the original version of the visual content.

8. The method according to claim 7, wherein the one or more visual properties include one or more of: contrast, brightness, white balance, dynamic range, frame rate, spatial resolution, geometry, focus, 3D angle, 3D depth.

9. The method according to any one of the above claims, wherein the media recording is obtained by a sender device for transmission to a receiver device, wherein the replacing of the visual content in the camera recording of the scene is performed by the receiver device, and wherein the method further comprises:
- the sender device retrieving and subsequently transmitting the original version of the visual content to the receiver device; or
- the sender device transmitting metadata to the receiver device which is indicative of a resource location from which the original version of the visual content is accessible, and the receiver device retrieving the original version of the visual content from the resource location based on the metadata.

10. The method according to claim 9, further comprising the sender device including in the metadata the coordinates of the screen in the camera recording.

11. A computer program product (250) comprising instructions (260) for causing a processor system to perform the method according to any one of claims 1 to 10.

12. A system (100) for enhancing a media recording (030), comprising:
- a first input interface (110) for accessing the media recording, the media recording comprising a camera recording of a scene,
**characterized by** the scene including a screen displaying visual content; and the system further comprising:
- an analysis subsystem (120) for analysing the camera recording of the scene to determine a location of the screen in the camera recording of the scene by determining coordinates of the screen in the camera recording of the scene;
- a second input interface (130) for accessing an original version of the visual content; and
- a replacement subsystem (140) for replacing, in the camera recording of the scene and using the coordinates of the screen, the visual content displayed on the screen by the original version of the visual content, thereby obtaining an enhanced media recording (040).

13. The system according to claim 12, comprising a sender device (300) and a receiver device (400), the sender device comprising:
- the first input interface for accessing the media recording, the media recording comprising the camera recording of the scene;
- the analysis subsystem for analysing the camera recording of the scene to determine a location of the screen in the camera recording of the scene by determining coordinates of the screen in the camera recording of the scene;
wherein the sender device is configured for:
- (i) retrieving and subsequently transmitting the original version of the visual content to the receiver device; or
- (ii) transmitting metadata to the receiver device indicative of a resource location from which the original version of the visual content is accessible; and
the receiver device comprising:
- the second input interface for accessing the original version of the visual content; and
- the replacement subsystem for replacing, in the camera recording of the scene and using coordinates of the screen in the camera recording of the scene, the visual content displayed on the screen by the original version of the visual content, thereby obtaining an enhanced media recording;
wherein the receiver device is configured for:
- (i) receiving the original version of the visual content from the sender device; or
- (ii) retrieving the original version from the resource location from which the original version of the visual content is accessible based on the metadata received from the sender device; and
wherein.the receiver device is configured for:
- (a) analysing the camera recording of the scene to determine the coordinates of the screen in the camera recording of the scene; or
- (b) receiving the coordinates of the screen in the camera recording of the scene from the sender device.

14. A sender device (300) for use in the system for enhancing a media recording according to claim 13, the sender device further comprising:
- a first input interface (110) for accessing the media recording, the media recording comprising a camera recording of a scene,
wherein the scene including a screen displaying visual content, and the sender device further comprising;
- an analysis subsystem (120) for analysing the camera recording of the scene to determine a location of the screen in the camera recording by determining coordinates of the screen in the camera recording of the scene; and
wherein the sender device is configured for:
- (i) retrieving and subsequently transmitting an original version of the visual content to the receiver device; or
- (ii) transmitting metadata to the receiver device indicative of a resource location from which the original version of the visual content is accessible.

15. A receiver device (400) for use in the system for enhancing a media recording according to claim 13, the receiver device further comprising:
- a second input interface (130) for accessing an original version of the visual content; and
- a replacement subsystem (140) for replacing, in the camera recording and using coordinates of the screen in the camera recording of the scene, the visual content displayed on the screen by the original version of the visual content, thereby obtaining an enhanced media recording;
wherein the receiver device is configured for:
- (i) receiving the original version of the visual content from the sender device; or
- (ii) retrieving the original version from the resource location from which the original version of the visual content is accessible based on metadata received from the sender device; and
wherein.the receiver device is configured for:
- (a) analysing the camera recording of the scene to determine a location of the screen in the camera recording of the scene by determining the coordinates of the screen in the camera recording of the scene; or
- (b) receiving the coordinates of the screen in the camera recording of the scene from the sender device.

## Patentansprüche

1. Verfahren zum Verbessern einer Medienaufzeichnung (030), das Folgendes umfasst:
- Zugreifen (210) auf die Medienaufzeichnung, wobei die Medienaufzeichnung eine Kameraaufzeichnung einer Szene (032) umfasst,
**dadurch gekennzeichnet, dass** die Szene einen Bildschirm enthält, der einen visuellen Inhalt (034) anzeigt; und das Verfahren ferner Folgendes umfasst:
- Analysieren (220) der Kameraaufzeichnung der Szene, um den Ort des Bildschirms in der Kameraaufzeichnung der Szene durch Bestimmen von Koordinaten des Bildschirms in der Kameraaufzeichnung der Szene zu bestimmen;
- Zugreifen (230) auf eine Originalversion des visuellen Inhalts (060); und
- Ersetzen (240) in der Kameraaufzeichnung der Szene und unter Verwendung der Koordinaten des Bildschirms des visuellen Inhalts, der auf dem Bildschirm angezeigt wird, durch die Originalversion des visuellen Inhalts, wodurch eine verbesserte Medienaufzeichnung (040) erhalten wird.

2. Verfahren nach Anspruch 1, wobei das Zugreifen auf die Originalversion des visuellen Inhalts Folgendes umfasst:
- Identifizieren des auf dem Bildschirm angezeigten visuellen Inhalts;
- anhand dessen, dass der angezeigte visuelle Inhalt identifiziert wurde, Identifizieren eines Bezugsquellenorts, der die Originalversion des visuellen Inhalts umfasst; und
- Zugreifen auf die Originalversion des visuellen Inhalts von dem Bezugsquellenort.

3. Verfahren nach Anspruch 2, wobei das Identifizieren des auf dem Bildschirm angezeigten visuellen Inhalts Folgendes umfasst:
- Identifizieren von Inhaltsdaten der Kameraaufzeichnung, die dem auf dem Bildschirm angezeigten visuellen Inhalt zugeordnet sind;
- Anwenden einer automatischen Inhaltserkennungstechnik auf die Inhaltsdaten, um den visuellen Inhalt zu identifizieren.

4. Verfahren nach Anspruch 3, wobei die automatische Inhaltserkennungstechnik umfasst, mindestens eines der Folgenden zu bestimmen: ein Audiowasserzeichen, ein Videowasserzeichen oder einen Fingerabdruck der Inhaltsdaten.

5. Verfahren nach Anspruch 2, wobei der auf dem Bildschirm angezeigte visuelle Inhalt eine Ausspielung durch eine Medienvorrichtung repräsentiert und wobei das Identifizieren des auf dem Bildschirm angezeigten visuellen Inhalts umfasst, Ausspielungsinformationen von der Medienvorrichtung zu empfangen, die den visuellen Inhalt angeben.

6. Verfahren nach Anspruch 5, wobei das Erhalten der Ausspielungsinformationen Folgendes umfasst:
- Abfragen der Medienvorrichtung über ein Netz nach den Ausspielungsinformationen; oder
- dass die Medienvorrichtung die Ausspielungsinformationen über das Netz sendet.

7. Verfahren nach einem der vorhergehenden Ansprüche, wobei das Ersetzen des visuellen Inhalts in der Kameraaufzeichnung der Szene umfasst, eine oder mehrere visuelle Eigenschaften der Originalversion des visuellen Inhalts anzupassen.

8. Verfahren nach Anspruch 7, wobei die eine oder die mehreren visuellen Eigenschaften eine oder mehrere der Folgenden enthalten: Kontrast, Helligkeit, Weißabgleich, dynamischer Bereich, Rahmenrate, räumliche Auflösung, Geometrie, Bildschärfe, 3D-Winkel, 3D-Tiefe.

9. Verfahren nach einem der vorhergehenden Ansprüche, wobei die Medienaufzeichnung durch eine Sendervorrichtung für eine Übertragung an eine Empfängervorrichtung erhalten wird, wobei das Ersetzen des visuellen Inhalts in der Kameraaufzeichnung der Szene durch die Empfängervorrichtung ausgeführt wird und wobei das Verfahren ferner Folgendes umfasst:
- dass die Sendervorrichtung die Originalversion des visuellen Inhalts erfasst und anschließend an die Empfängervorrichtung sendet; oder
- dass die Sendervorrichtung Metadaten an die Empfängervorrichtung sendet, die einen Bezugsquellenort angeben, von dem die Originalversion des visuellen Inhalts erhältlich ist, und die Empfängervorrichtung die Originalversion des visuellen Inhalts von dem Bezugsquellenort anhand der Metadaten erfasst.

10. Verfahren nach Anspruch 9, das ferner umfasst, dass die Sendervorrichtung in die Metadaten die Koordinaten des Bildschirms in der Kameraaufzeichnung einschließt.

11. Computerprogrammprodukt (250), das Anweisungen (260) umfasst, um zu bewirken, dass ein Prozessorsystem das Verfahren nach einem der Ansprüche 1 bis 10 ausführt.

12. System (100) zum Verbessern einer Medienaufzeichnung (030), das Folgendes umfasst:
- eine erste Eingangsschnittstelle (110) zum Zugreifen auf die Medienaufzeichnung, wobei die Medienaufzeichnung eine Kameraaufzeichnung einer Szene umfasst,
**dadurch gekennzeichnet, dass** die Szene einen Bildschirm enthält, der einen visuellen Inhalt anzeigt; und das System ferner Folgendes umfasst:
- ein Analyseuntersystem (120) zum Analysieren der Kameraaufzeichnung der Szene, um einen Ort des Bildschirms in der Kameraaufzeichnung der Szene durch Bestimmen von Koordinaten des Bildschirms in der Kameraaufzeichnung der Szene zu bestimmen;
- eine zweite Eingangsschnittstelle (130) zum Zugreifen auf eine Originalversion des visuellen Inhalts; und
- ein Ersetzungsuntersystem (140) zum Ersetzen in der Kameraaufzeichnung der Szene und unter Verwendung der Koordinaten des Bildschirms des visuellen Inhalts, der auf dem Bildschirm angezeigt wird, durch die Originalversion des visuellen Inhalts, wodurch eine verbesserte Medienaufzeichnung (040) erhalten wird.

13. System nach Anspruch 12, das eine Sendervorrichtung (300) und eine Empfängervorrichtung (400) umfasst, wobei die Sendervorrichtung Folgendes umfasst:
- die erste Eingangsschnittstelle zum Zugreifen auf die Medienaufzeichnung, wobei die Medienaufzeichnung die Kameraaufzeichnung der Szene umfasst;
- das Analyseuntersystem zum Analysieren der Kameraaufzeichnung der Szene, um einen Ort des Bildschirms in der Kameraaufzeichnung der Szene durch Bestimmen von Koordinaten des Bildschirms in der Kameraaufzeichnung der Szene zu bestimmen;
wobei die Sendervorrichtung konfiguriert ist zum:
- (i) Erfassen und anschließenden Senden der Originalversion des visuellen Inhalts an die Empfängervorrichtung; oder
- (ii) Senden von Metadaten an die Empfängervorrichtung, die einen Bezugsquellenort angeben, von dem die Originalversion des visuellen Inhalts erhältlich ist; und
die Empfängervorrichtung Folgendes umfasst:
- eine zweite Eingangsschnittstelle zum Zugreifen auf die Originalversion des visuellen Inhalts; und
- das Ersetzungsuntersystem zum Ersetzen in der Kameraaufzeichnung der Szene und unter Verwendung der Koordinaten des Bildschirms in der Kameraaufzeichnung der Szene des visuellen Inhalts, der auf dem Bildschirm angezeigt wird, durch die Originalversion des visuellen Inhalts, wodurch eine verbesserte Medienaufzeichnung (040) erhalten wird;
wobei die Empfängervorrichtung konfiguriert ist zum:
- (i) Empfangen der Originalversion des visuellen Inhalts von der Sendervorrichtung; oder
- (ii) Erfassen der Originalversion von dem Bezugsquellenort, von dem die Originalversion des visuellen Inhalts erhältlich ist, anhand der von der Sendervorrichtung empfangenen Metadaten; und
wobei die Empfängervorrichtung konfiguriert ist zum:
- (a) Analysieren der Kameraaufzeichnung der Szene, um die Koordinaten des Bildschirms in der Kameraaufzeichnung der Szene zu bestimmen; oder
- (b) Empfangen der Koordinaten des Bildschirms in der Kameraaufzeichnung der Szene von der Sendervorrichtung.

14. Sendervorrichtung (300) für die Verwendung in dem System zum Verbessern einer Medienaufzeichnung nach Anspruch 13, wobei die Sendervorrichtung ferner Folgendes umfasst:
- eine erste Eingangsschnittstelle (110) zum Zugreifen auf die Medienaufzeichnung, wobei die Medienaufzeichnung eine Kameraaufzeichnung einer Szene umfasst,
wobei die Szene einen Bildschirm enthält, der einen visuellen Inhalt anzeigt und die Sendervorrichtung ferner Folgendes umfasst:
- ein Analyseuntersystem (120) zum Analysieren der Kameraaufzeichnung der Szene, um einen Ort des Bildschirms in der Kameraaufzeichnung der Szene durch Bestimmen von Koordinaten des Bildschirms in der Kameraaufzeichnung der Szene zu bestimmen; und
wobei die Sendervorrichtung konfiguriert ist zum:
- (i) Erfassen und anschließenden Senden einer Originalversion des visuellen Inhalts an die Empfängervorrichtung; oder
- (ii) Senden von Metadaten an die Empfängervorrichtung, die einen Bezugsquellenort angeben, von dem die Originalversion des visuellen Inhalts erhältlich ist.

15. Empfängervorrichtung (400) für die Verwendung in dem System zum Verbessern einer Medienaufzeichnung nach Anspruch 13, wobei die Empfängervorrichtung ferner Folgendes umfasst:
- eine zweite Eingangsschnittstelle (130) zum Zugreifen auf eine Originalversion des visuellen Inhalts; und
- ein Ersetzungsuntersystem (140) zum Ersetzen in der Kameraaufzeichnung und unter Verwendung der Koordinaten des Bildschirms in der Kameraaufzeichnung der Szene des auf dem Bildschirm angezeigten visuellen Inhalts durch die Originalversion des visuellen Inhalts, wodurch eine verbesserte Medienaufzeichnung erhalten wird;
wobei die Empfängervorrichtung konfiguriert ist zum:
- (i) Empfangen der Originalversion des visuellen Inhalts von der Sendervorrichtung; oder
- (ii) Erfassen der Originalversion von dem Bezugsquellenort, von dem die Originalversion des visuellen Inhalts erhältlich ist, anhand von Metadaten, die von der Sendervorrichtung empfangen werden; und
wobei die Empfängervorrichtung konfiguriert ist zum:
- (a) Analysieren der Kameraaufzeichnung der Szene, um einen Ort des Bildschirms in der Kameraaufzeichnung der Szene durch Bestimmen der Koordinaten des Bildschirms in der Kameraaufzeichnung der Szene zu bestimmen; oder
- (b) Empfangen der Koordinaten des Bildschirms in der Kameraaufzeichnung der Szene von der Sendervorrichtung.

## Revendications

1. Procédé d'amélioration d'un enregistrement média (030), comprenant :
- l'accès (210) à l'enregistrement média, l'enregistrement média comprenant un enregistrement par caméra d'une scène (032),
le procédé étant **caractérisé en ce que** la scène comporte un écran affichant un contenu visuel (034) ; et **en ce qu'**il comprend en outre :
- l'analyse (220) de l'enregistrement par caméra de la scène afin de déterminer l'emplacement de l'écran dans l'enregistrement par caméra de la scène par détermination de coordonnées de l'écran dans l'enregistrement par caméra de la scène ;
- l'accès (230) à une version originale du contenu visuel (060) ; et
- le remplacement (240), dans l'enregistrement par caméra de la scène et à l'aide des coordonnées de l'écran, du contenu visuel affiché sur l'écran par la version originale du contenu visuel, de manière à obtenir un enregistrement média amélioré (040).

2. Procédé selon la revendication 1, dans lequel l'accès à la version originale du contenu visuel comprend :
- l'identification du contenu visuel affiché sur l'écran ;
- sur la base de l'identification du contenu visuel affiché, l'identification d'un emplacement de ressource comprenant la version originale du contenu visuel ; et
- l'accès à la version originale du contenu visuel à partir de l'emplacement de ressource.

3. Procédé selon la revendication 2, dans lequel l'identification du contenu visuel affiché sur l'écran comprend :
- l'identification de données de contenu de l'enregistrement par caméra qui sont associées au contenu visuel affiché sur l'écran ;
- l'application d'une technique de reconnaissance automatique de contenu aux données de contenu afin d'identifier ledit contenu visuel.

4. Procédé selon la revendication 3, dans lequel la technique de reconnaissance automatique de contenu comprend la détermination d'un filigrane audio et/ou d'un filigrane vidéo et/ou d'une empreinte digitale des données de contenu.

5. Procédé selon la revendication 2, dans lequel le contenu visuel affiché sur l'écran représente une diffusion par un dispositif média, et dans lequel l'identification du contenu visuel affiché sur l'écran comprend l'obtention d'informations de diffusion auprès du dispositif média qui indiquent ledit contenu visuel.

6. Procédé selon la revendication 5, dans lequel l'obtention des informations de diffusion comprend :
- l'interrogation du dispositif média par le biais d'un réseau à la recherche des informations de diffusion ; ou
- l'envoi, par le dispositif média, des informations de diffusion par le biais du réseau.

7. Procédé selon l'une quelconque des revendications précédentes, dans lequel le remplacement du contenu visuel dans l'enregistrement par caméra de la scène comprend l'ajustement d'une ou de plusieurs propriétés visuelles de la version originale du contenu visuel.

8. Procédé selon la revendication 7, dans lequel les une ou plusieurs propriétés visuelles comportent un ou plusieurs éléments dans le groupe constitué par : le contraste, la luminosité, l'équilibre des blancs, la plage dynamique, la fréquences d'images, la résolution spatiale, la géométrie, la netteté, l'angle 3D, la profondeur 3D.

9. Procédé selon l'une quelconque des revendications précédentes, dans lequel l'enregistrement média est obtenu par un dispositif émetteur en vue de sa transmission à un dispositif récepteur, le remplacement du contenu visuel dans l'enregistrement par caméra de la scène étant réalisé par le dispositif récepteur et le procédé comprenant en outre :
- l'extraction puis la transmission, par le dispositif émetteur, de la version originale du contenu visuel au dispositif récepteur ; ou
- la transmission, par le dispositif émetteur, au dispositif récepteur, de métadonnées indiquant un emplacement de ressource à partir duquel la version originale du contenu visuel est accessible, et l'extraction, par le dispositif récepteur, de la version originale du contenu visuel à partir de l'emplacement de ressource sur la base des métadonnées.

10. Procédé selon la revendication 9, comprenant en outre l'incorporation, par le dispositif émetteur, dans les métadonnées, des coordonnées de l'écran dans l'enregistrement par caméra.

11. Produit-programme d'ordinateur (250) comprenant des instructions (260) destinées à amener un système processeur à réaliser le procédé selon l'une quelconque des revendications 1 à 10.

12. Système (100) permettant l'amélioration d'un enregistrement média (030), comprenant :
- une première interface d'entrée (110) permettant l'accès à l'enregistrement média, l'enregistrement média comprenant un enregistrement par caméra d'une scène,
le système étant **caractérisé en ce que** la scène comporte un écran affichant un contenu visuel ; et **en ce qu'**il comprend en outre :
- un sous-système d'analyse (120) permettant l'analyse de l'enregistrement par caméra de la scène afin de déterminer un emplacement de l'écran dans l'enregistrement par caméra de la scène par détermination de coordonnées de l'écran dans l'enregistrement par caméra de la scène ;
- une deuxième interface d'entrée (130) permettant l'accès à une version originale du contenu visuel ; et
- un sous-système de remplacement (140) permettant le remplacement, dans l'enregistrement par caméra de la scène et à l'aide des coordonnées de l'écran, du contenu visuel affiché sur l'écran par la version originale du contenu visuel, de manière à obtenir un enregistrement média amélioré (040).

13. Système selon la revendication 12, comprenant un dispositif émetteur (300) et un dispositif récepteur (400), le dispositif émetteur comprenant :
- la première interface d'entrée permettant l'accès à l'enregistrement média, l'enregistrement média comprenant l'enregistrement par caméra de la scène ;
- le sous-système d'analyse permettant l'analyse de l'enregistrement par caméra de la scène afin de déterminer un emplacement de l'écran dans l'enregistrement par caméra de la scène par détermination de coordonnées de l'écran dans l'enregistrement par caméra de la scène ;
le dispositif émetteur étant configuré pour :
- (i) extraire puis transmettre la version originale du contenu visuel au dispositif récepteur ; ou
- (ii) transmettre, au dispositif récepteur, des métadonnées indiquant un emplacement de ressource à partir duquel la version originale du contenu visuel est accessible ; et
le dispositif récepteur comprenant :
- la deuxième interface d'entrée permettant l'accès à la version originale du contenu visuel ; et
- le sous-système de remplacement permettant le remplacement, dans l'enregistrement par caméra de la scène et à l'aide de coordonnées de l'écran dans l'enregistrement par caméra de la scène, du contenu visuel affiché sur l'écran par la version originale du contenu visuel, de manière à obtenir un enregistrement média amélioré ;
le dispositif récepteur étant configuré pour :
- (i) recevoir la version originale du contenu visuel depuis le dispositif émetteur ; ou
- (ii) extraire la version originale à partir de l'emplacement de ressource à partir duquel la version originale du contenu visuel est accessible sur la base des métadonnées reçues depuis le dispositif émetteur ; et
le dispositif récepteur étant configuré pour :
- (a) analyser l'enregistrement par caméra de la scène afin de déterminer les coordonnées de l'écran dans l'enregistrement par caméra de la scène ; ou
- (b) recevoir les coordonnées de l'écran dans l'enregistrement par caméra de la scène depuis le dispositif émetteur.

14. Dispositif émetteur (300) destiné à être utilisé dans le système permettant l'amélioration d'un enregistrement média selon la revendication 13, le dispositif émetteur comprenant en outre :
- une première interface d'entrée (110) permettant l'accès à l'enregistrement média, l'enregistrement média comprenant un enregistrement par caméra d'une scène,
la scène comportant un écran affichant un contenu visuel, et le dispositif émetteur comprenant en outre :
- un sous-système d'analyse (120) permettant l'analyse de l'enregistrement par caméra de la scène afin de déterminer un emplacement de l'écran dans l'enregistrement par caméra de la scène par détermination de coordonnées de l'écran dans l'enregistrement par caméra de la scène ; et
le dispositif émetteur étant configuré pour :
- (i) extraire puis transmettre une version originale du contenu visuel au dispositif récepteur ; ou
- (ii) transmettre, au dispositif récepteur, des métadonnées indiquant un emplacement de ressource à partir duquel la version originale du contenu visuel est accessible.

15. Dispositif récepteur (400) destiné à être utilisé dans le système permettant l'amélioration d'un enregistrement média selon la revendication 13, le dispositif récepteur comprenant en outre :
- une deuxième interface d'entrée (130) permettant l'accès à une version originale du contenu visuel ; et
- un sous-système de remplacement (140) permettant le remplacement, dans l'enregistrement par caméra et à l'aide de coordonnées de l'écran dans l'enregistrement par caméra de la scène, du contenu visuel affiché sur l'écran par la version originale du contenu visuel, de manière à obtenir un enregistrement média amélioré ;
le dispositif récepteur étant configuré pour :
- (i) recevoir la version originale du contenu visuel depuis le dispositif émetteur ; ou
- (ii) extraire la version originale à partir de l'emplacement de ressource à partir duquel la version originale du contenu visuel est accessible sur la base de métadonnées reçues depuis le dispositif émetteur ; et
le dispositif récepteur étant configuré pour :
- (a) analyser l'enregistrement par caméra de la scène afin de déterminer un emplacement de l'écran dans l'enregistrement par caméra de la scène en déterminant les coordonnées de l'écran dans l'enregistrement par caméra de la scène ; ou
- (b) recevoir les coordonnées de l'écran dans l'enregistrement par caméra de la scène depuis le dispositif émetteur.
